# EUROPEAN PATENT APPLICATION

(11) **EP 4 699 842 A1**
(43) Date of publication of application: **25.02.2026**
(21) Application number: 25187254.5
(22) Date of filing: 03.07.2025
(51) Int. Cl.: B60K 6/448, B60W 10/06, B60W 10/08, B60W 10/26, B60W 20/12, B60W 20/14

(54) **TRAJECTORY PATH PLANNING FOR BATTERY MANAGEMENT WITH INFINITELY VARIABLE TRANSMISSION OF A HYBRID VEHICLE**

(30) Priority: 23.08.2024 US 202463686355 P; 28.01.2025 US 202519039143
(71) Applicant: Deere & Company, Moline, IL 61265 (US)
(72) Inventor: Rudolph, Kirk, Mannheim (DE); Curiel Olivares, Gonzalo, Mannheim (DE); Nicholson, Jason, Mannheim (DE)
(74) Representative: Holst, Sönke

(57) **Abstract**

A method for controlling a vehicle includes obtaining topographic data associated with a geographic area, and selecting a path plan based on the topographic data. The path plan indicates a directional path of travel associated with the geographic area, and includes target states of charge (SOC) associated with the segments. The method includes identifying first segments having decreasing elevation as targets for a regenerative mode, during which energy is returned to an energy storage device in the vehicle, and identifying second segments including a plurality of portions having at least one of an increasing elevation or a substantially unchanging elevation. During travel of the vehicle along selected segments of the plurality of segments, operating the vehicle in an operating mode determined in accordance with the path plan until the energy storage device is discharged to a target state of charge (SOC).

## Description

### DESCRIPTION

**At** least one example embodiment relates generally to trajectory path planning such as trajectory path planning for battery management with an infinitely variable transmission of a hybrid vehicle.

### BACKGROUND

Conventional management of vehicle power, including battery management, is a reactive process in which various parameters may be adjusted based on conditions being experienced by a vehicle.

### SUMMARY

Some example embodiments use trajectory planning to establish, in advance of a vehicle traveling along a path, a vehicle-specific path plan including drive modes associated with particular segments or portions of a path the vehicle is anticipated to travel. The drive modes within a plan may be associated with path segments having particular characteristics, in an attempt to optimize and/or improve one or more operating parameters for a specific vehicle, subject to vehicular system constraints and capabilities. For example, a vehicle may operate in accordance with a path plan constructed to ensure that at the end of a given path of travel, a battery of a hybrid vehicle has substantially the same charge it had at the beginning of the given path of travel - despite the fact that, during travel along part of the path, energy from the battery was used to augment propulsion supplied by an internal combustion engine included in the hybrid vehicle. In at least one embodiment, a selected path plan may be implemented automatically, without additional human intervention.

An example embodiment includes a method for controlling a vehicle, the method comprising: obtaining topographic data associated with a geographic area; selecting a path plan for use by the vehicle based on the topographic data, the path plan indicating a directional path of travel associated with the geographic area, and the path plan including target states of charge (SOC) associated with a plurality of segments of the directional path of travel; identifying first segments of the plurality of segments in the directional path of travel as targets for a regenerative mode, the first segments having decreasing elevation, the regenerative mode returning energy to an energy storage device in the vehicle; identifying second segments of the plurality of segments in the directional path of travel the second segments of the plurality of segments including a plurality of portions having at least one of an increasing elevation or a substantially unchanging elevation; and during travel of the vehicle along selected segments of the plurality of segments , operating the vehicle in an operating mode determined in accordance with the path plan until the energy storage device is discharged to a target state of charge (SOC).

Other example embodiments include a system comprising: a GPS receiver configured to locate a vehicle in relation to a directional path of travel; an inertial measurement unit or an accelerometer configured to generate inertial measurements associated with a tilt, a roll and a yaw of the vehicle; a controller configured to control a transmission of the vehicle to enter a selected mode of operation in accordance with a path plan and the inertial measurements, the selected mode of operation being selected to reduce a cost function associated with a state of charge (SOC) of an energy storage device of the vehicle; the transmission including clutches configured to implement the selected mode of operation of the transmission from among a plurality of possible modes of operation of the transmission, a gearbox, and a variator integral with the gearbox and configured to operate in a selected mode of operation, the variator including a planetary gear arrangement including planetary gears, a sun gear, and a ring gear, the variator configured to couple a crankshaft of an internal combustion engine to the sun gear, and the planetary gears are selectively coupled to certain gears of the gearbox for operation in first modes, and the ring gear is selectively coupled to other gears of the gearbox for operation in second modes; a first electric machine coupled to the gearbox to provide or receive a first rotational energy via the gearbox; a second electric machine coupled to the gearbox to provide or receive a second rotational energy via the variator; at least one inverter coupled to the first electric machine and the second electric machine, the at least one inverter configured to control the first electric machine and the second electric machine in a motoring mode and in a regenerative mode; in the regenerative mode, the at least one inverter is configured to rectify alternating current generated by rotation of the first electric machine and the second electric machine to charge the energy storage device; and the at least one inverter configured to output rotational speed and torque values based on alternating current (AC) phase measurements of the first electric machine and second electric machine.

Yet other example embodiments include a system, such as a controller, comprising: processing circuitry configured to cause the system to obtain a path plan for use by a vehicle, the path plan indicating a directional path of travel associated with a geographic area, and including operational limits, and target states of (SOC) associated with a plurality of segments of the directional path of travel, identify first segments of the plurality of segments in the directional path of travel as targets for a regenerative mode, the first segments of the plurality of segments having a decreasing elevation, the regenerative mode configured to return energy to an energy storage device in the vehicle, identify second segments of the plurality of segments in the directional path of travel the second segments of the plurality of segments having at least one of an increasing elevation or a substantially unchanging elevation, and during travel of the vehicle along selected segments of the plurality of segments, operate the vehicle in an operating mode determined in accordance with the path plan until the energy storage device is discharged to a target state of charge (SOC).

The following illustrative embodiments are disclosed herein.

Illustrative embodiment 1 includes a method for controlling a vehicle, the method comprising: obtaining topographic data associated with a geographic area; selecting a path plan for use by the vehicle based on the topographic data, the path plan indicating a directional path of travel associated with the geographic area, and the path plan including target states of charge (SOC) associated with a plurality of segments of the directional path of travel; identifying first segments of the plurality of segments in the directional path of travel as targets for a regenerative mode, the first segments having decreasing elevation, the regenerative mode returning energy to an energy storage device in the vehicle; identifying second segments of the plurality of segments in the directional path of travel the second segments of the plurality of segments including a plurality of portions having at least one of an increasing elevation or a substantially unchanging elevation; and during travel of the vehicle along selected segments of the plurality of segments , operating the vehicle in an operating mode determined in accordance with the path plan until the energy storage device is discharged to a target state of charge (SOC).

Illustrative embodiment 2 includes the method of illustrative embodiment 1, wherein the obtaining the topographic data includes: obtaining the topographic data from previous work done by the vehicle, or previous work done by another vehicle, at a worksite including the directional path of travel; and/or obtaining the topographic data from a survey including one or more of GPS coordinates or waypoints along the directional path of travel.

Illustrative embodiment 3 includes the method of illustrative embodiments 1 or 2, further comprising: obtaining an observed SOC, deriving a generator torque for one or more of a first electric machine or a second electric machine for a regenerative mode based on the observed SOC and the target SOC; and deriving an engine torque and at least one of a first electric machine torque or a second electric machine torque to be applied in a selected mode, the deriving the engine torque being based on the generator torque, a gain, and an operator input torque.

Illustrative embodiment 4 includes the method of illustrative embodiment 3, wherein each target SOC is determined based on a slope of the respective first segment of the plurality of segments, a length of the respective second segment of the plurality of segments, a ground speed of the vehicle, and a capacity to recharge the energy storage device during the regenerative mode.

Illustrative embodiment 5 includes the method of any of illustrative embodiments 1-4, wherein the regenerative mode includes one of a regenerative braking mode or a coasting mode.

Illustrative embodiment 6 includes the method of illustrative embodiments 1-5, further comprising: preventing entry into the regenerative mode in response to the energy storage device satisfying an SOC full threshold during a time the vehicle is traversing at least one of the first segments of the plurality of segments.

Illustrative embodiment 7 includes the method of any of illustrative embodiments 1-6, further comprising: permitting entry into a battery use mode in response to the SOC satisfying an SOC full threshold during a time the vehicle is traversing at least one of the second segments of the plurality of segments; and using the energy storage device to provide power for at least a portion of vehicle propulsion during the battery use mode; and/or using power provided by the energy storage device to engage a propulsion mechanism of the vehicle through a power take-off.

Illustrative embodiment 8 includes the method of illustrative embodiments 6 or 7 wherein the SOC full threshold is between approximately 90% to 100 % SOC of the energy storage device.

Illustrative embodiment 9 includes the method of illustrative embodiments 1-8, wherein the path plan selected for use by the vehicle includes one of a point-to-point path plan or a coverage-area path plan selected from a list of candidate path plans by a path planner module, or a previously recorded path plan historically used to complete a relevant task within the geographic area.

Illustrative embodiment 10 includes a system comprising: a GPS receiver configured to locate a vehicle in relation to a directional path of travel; an inertial measurement unit or an accelerometer configured to generate inertial measurements associated with a tilt, a roll and a yaw of the vehicle; a controller configured to control a transmission of the vehicle to enter a selected mode of operation in accordance with a path plan and the inertial measurements, the selected mode of operation being selected to reduce a cost function associated with a state of charge (SOC) of an energy storage device of the vehicle; the transmission including clutches configured to implement the selected mode of operation of the transmission from among a plurality of possible modes of operation of the transmission, a gearbox, and a variator integral with the gearbox and configured to operate in a selected mode of operation, the variator including a planetary gear arrangement including planetary gears, a sun gear, and a ring gear, the variator configured to couple a crankshaft of an internal combustion engine to the sun gear, and the planetary gears are selectively coupled to certain gears of the gearbox for operation in first modes, and the ring gear is selectively coupled to other gears of the gearbox for operation in second modes; a first electric machine coupled to the gearbox to provide or receive a first rotational energy via the gearbox; a second electric machine coupled to the gearbox to provide or receive a second rotational energy via the variator; at least one inverter coupled to the first electric machine and the second electric machine, the at least one inverter configured to control the first electric machine and the second electric machine in a motoring mode and in a regenerative mode; in the regenerative mode, the at least one inverter is configured to rectify alternating current generated by rotation of the first electric machine and the second electric machine to charge the energy storage device; and the at least one inverter configured to output rotational speed and torque values based on alternating current (AC) phase measurements of the first electric machine and second electric machine.

Illustrative embodiment 11 includes the system of illustrative embodiment 10, wherein the controller is configured to implement a machine learning model or a model predictive controller (MPC).

Illustrative embodiment 12 includes the system of illustrative embodiments 10 or 11, further including speed sensors configured to sense rotational speeds associated with shafts of the transmission, the gearbox, the internal combustion engine, or the variator, wherein the speed sensors include one or more of a resolver, an encoder, a Hall Effect sensor, or a magnetic field sensor.

Illustrative embodiment 13 includes the system of any of illustrative embodiments 10-12, wherein the plurality of possible modes of operation of the transmission include two or more of a shared parallel drive mode, a sole drive mode of the internal combustion engine, a sole drive mode of the first electric machine, a sole drive mode of the second electric machine, a regenerative mode of the first electric machine, a sole drive mode of the second electric machine, or a coasting mode.

Illustrative embodiment 14 includes the system of any of illustrative embodiments 10-13, further comprising: a battery management system, transmission control unit, or inverter configured to control the SOC of the energy storage device.

Illustrative embodiment 15 includes the system of any of illustrative embodiments 10-14 configured to implement the method of any of the illustrative embodiments 1-13.

### BRIEF DESCRIPTION OF THE DRAWINGS

Example embodiments will be more clearly understood from the following detailed description taken in conjunction with the accompanying drawings. The following figures represent non-limiting, example embodiments as described herein.
FIG. 1 is a schematic diagram illustrating an electric Infinitely Variable Transmission (elVT) powertrain according to one or more example embodiments;
FIG. 2 is a block diagram of an online closed loop control system according to one or more example embodiments;
FIG. 3 is series of graphs illustrating optimization constraints according to one or more example embodiments;
FIG. 4 is a schematic block diagram illustrating a control process for generating desired engine, motor, and generator torques to optimize or improve a brake-specific fuel consumption (BSFC) according to one or more example embodiments;
FIG. 5 is a schematic block diagram illustrating a control process for generating desired engine, motor, and generator torques for a Diesel-Electric vehicle according to one or more example embodiments;
FIG. 6 is a schematic block diagram illustrating a control process for generating desired engine, motor, and generator torques to maintain a 50/50 Torque Split according to one or more example embodiments;
FIG. 7 is a schematic block diagram illustrating a control process for generating desired engine, motor, and generator torques to maintain zero-generator torque according to one or more example embodiments;
FIG. 8 is a schematic block diagram illustrating a control process for generating desired engine, motor, and generator torques based on tracking an SOC trajectory according to one or more example embodiments;
FIG. 9 is a block diagram illustrating a system according to one or more example embodiments;
FIG. 10A is a block diagram illustrating an elVT induced/delayed shifting implementation according to one or more example embodiments;
FIG. 10B is a graph illustrating hysteresis associated with shifting according to one or more example embodiments;
FIG. 11A is a stick diagram illustrating an elVT transmission according to one or more example embodiments;
FIG. 11B is a diagram of a variator according to one or more example embodiments;
FIG. 12 is a flowchart illustrating a method of controlling a vehicle based on a path plan according to one or more example embodiments;
FIG. 13 is a flowchart illustrating another method of controlling a vehicle based on a path plan according to one or more example embodiments;
FIG. 14 is a flowchart illustrating a method of shifting an elVT transmission according to one or more example embodiments; and
FIG. 15 is a block diagram illustrating a processing device according to one or more example embodiments.

### DETAILED DESCRIPTION

Some example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

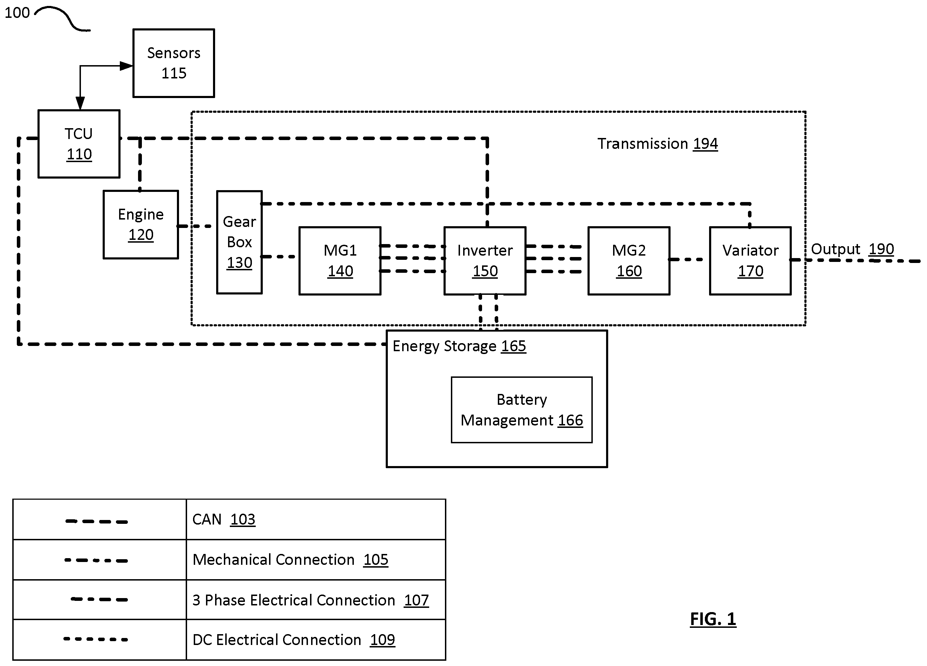

Referring first to FIG. 1, an electric Infinitely Variable Transmission (elVT) powertrain 100 will be discussed according to one or more example embodiments. The elVT powertrain 100 may be part of a vehicle propulsion system (not illustrated), and includes a transmission control unit (TCU) 110, an engine 120, sensors 115, an energy storage system 165 and a transmission 194 that includes a gearbox 130, a first motor generator (MG1) 140, an inverter 150, a second motor generator (MG2) 160, and a variator 170, which produces an output 190. Energy storage system 165 may also include battery management system 166, including various AC and or DC voltage and current sensors, voltage regulators, and the like. In various portions of this disclosure, the MG1 140 may be referred to as a first electric machine, and the MG2 160 may be referred to as a second electric machine. In some example embodiments, the MG1 140 and the MG2 160 are permanent magnet synchronous motors (PMSM), using interior permanent magnets (IPM) embedded inside a rotor. It will be appreciated that other implementations are not limited to PMSM motors. For example, using surface permanent magnets (SPM) on the outside surface of the rotor may be used in other implementations.

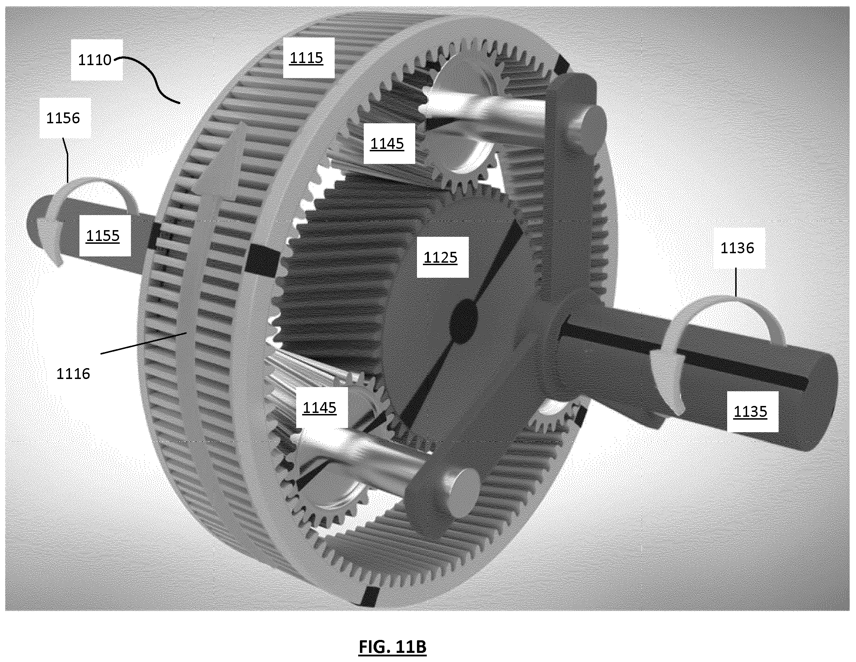

In one or more example embodiments, the variator 170 includes a planetary gearset, or open differential gearset, a simplified version of which is illustrated and discussed subsequently with respect to FIG. 11B. In general, the variator 170 splits mechanical rotational power in parallel. In at least one example embodiment, the variator 170 includes a dual planetary gearset, which provides a more compact arrangement of gears, as known to those of skill in the art. In one or more example embodiments, the planetary gear arrangement includes gears that are selectively coupled to certain gears of the gearbox for operation in first modes (e.g., regenerative modes), and the ring gear is selectively coupled to other gears of the gearbox for operation in second modes (e.g., non-regenerative/motoring modes).

In at least one example embodiment, the variator 170 is integral with the gearbox 130. The variator 170 and the gearbox 130 may cooperate to support a shared parallel drive mode of the engine 120 and one or more of the first electric machine (MG1 140) or the second electric machine (MG2 160), a sole drive mode of engine 120, a sole drive mode of at least one of the first electric machine or the second electric machine, a regenerative mode of at least one of the first electric machine or the second electric machine, or a regenerative (e.g. coasting) mode in which at least one of the first electric machine or the second electric machine recharge the energy storage device. Other modes, or combinations of modes, may also be implemented.

The engine 120 may be a spark-ignited internal combustion engine (e.g. a gasoline engine) or a compression ignited internal combustion engine (e.g. a diesel engine). In at least one example embodiment, the inverter 150 is a traction inverter, which is a DC-AC inverter that converts a direct current (DC) supply from the vehicle's batteries into an alternating current (AC) output used by MG1 140 and/or MG2 160. In one or more example embodiments, MG1 140 and/or MG2 160 perform both the drive and regeneration functions, acting as both electric generators and traction motors. In their capacity as electric generators, MG1 140 and/or MG2 160 generate electricity from the rotating wheels while braking, transferring that energy back to the energy storage system 165, such as a traction battery pack. In their capacity as traction motors, MG1 140 and/or MG2 160 use power from the energy storage system 165 to drive the vehicle's wheels. In at least one example embodiment, MG1 140 provides rotational energy to the vehicle's wheels through a physical connection to a drive shaft of the engine 120, and MG2 160 provides rotational energy to the vehicle's wheels through a physical connection to the variator 170.

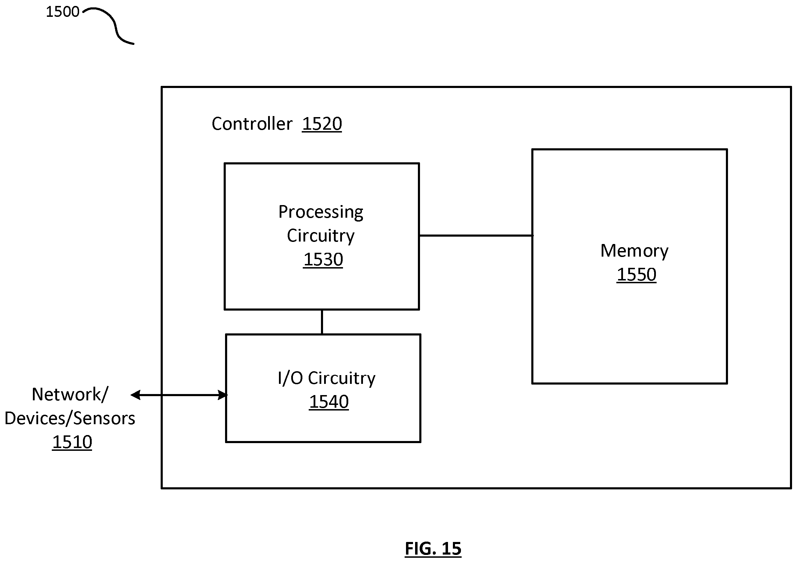

In one or more example embodiments, the TCU 110 is communicatively coupled to the engine 120, the inverter 150, and the energy storage system 165 via a controller area network (CAN) 103. In one or more example embodiments, the TCU 110 is configured to implement a path plan by generating control signals in accordance with the path plan, and transmitting those control signals to the engine 120, the inverter 150, and the energy storage system 165 via the CAN 103. In some example embodiments, the TCU 110 , an example of which is shown in FIG. 15, includes specially configured processing circuitry such as a microprocessor or other processor in conjunction with software or firmware, or some combination thereof. In other example embodiments, the processing circuitry may include an application specific integrated circuit (ASIC) or graphics processing unit (GPU). Examples of the processing circuitry are not limited thereto. In some example embodiments, the controller is configured to implement a machine learning model trained using supervised or unsupervised training methods, or a model predictive controller (MPC), which calculates control actions to minimize a cost function. In some such example embodiments, a relatively small neural network is used as a function approximation for very complicated physics. The function approximation receives sensor data and applied actuation data through a neural network to learn, via unsupervised or supervised training, how the application of torque results in changes in speed, and/or how to track desired speeds.

In one or more example embodiments, the engine 120 is an internal combustion engine configured to act as one of multiple sources of propulsion energy. The engine 120 is coupled to transfer the propulsion energy to the gearbox 130 via a mechanical connection 105. The gearbox 130 transmits all or a portion of the propulsion energy generated by the engine 120 to the variator 170 via another mechanical connection 105. Note that FIG. 1 illustrates the connections between the gearbox 130 and the variator 170 schematically, but in at least some example embodiments the variator 170 is integral to the gearbox 130.

The gearbox 130 is also coupled to the MG1 140 via a mechanical connection 105. Propulsion energy generated by the MG1 140 is transferred to the variator 170 via the gearbox 130. In one or more example embodiments, propulsion energy from the MG1 140 is combined with the propulsion energy generated by the engine 120 and included in the output 190. The propulsion energy generated by the MG1 140 may be used to supplement or oppose the propulsion energy generated by the engine 120 and delivered to the output 190.

In one or more example embodiments, the MG1 140 is coupled via a three-phase electrical connection 107 to the inverter 150, which is in turn coupled to the energy storage system 165 via DC electrical connections 109. In some example embodiments, the MG1 140 and the engine 120 apply propulsion energy to a common shaft. Thus, MG1 140 may use some of the propulsion energy generated by the engine 120 to generate electrical energy and store that electrical energy in the energy storage system 165 through the inverter 150. In this instance and other examples where the energy storage system 165 is being recharged (e.g. a regenerative mode/regenerative mode) by the MG1 140 or the MG2 160, the inverter 150 is operating as a rectifier. For example, in a regenerative mode, e.g. a braking mode or a coasting mode, some of the propulsion/rotational energy being transferred along the common shaft may be used to recharge energy storage devices included the energy storage system 165. In some example embodiments, the energy storage system 165 may include a battery management system and one or more batteries.

It will be appreciated that regeneration does not necessarily reduce rotational velocity (braking), the terms braking mode and coasting mode are not coextensive. For example, in a coasting mode, a constant speed may be maintained while driving down a hill, even though the electric machine is applying negative torque at positive speed resulting in regenerative power which charges the battery.

In one or more example embodiments, one or more inverters, such as inverter 150, control the first electric machine and the second electric machine in motoring and regenerative modes. In at least one example embodiment, inverter 150 may be a dual inverter, so that one three-phase inverter is provided for each electric machine. In regenerative modes, the one or more inverters rectify alternating current generated by rotation of the first electric machine and the second electric machine to charge the energy storage device. In at least one example embodiment, the one or more inverters output rotational speed and torque values based on alternating current (AC) phase measurements of the first electric machine and second electric machine.

Also, in one or more example embodiments, the variator 170 (FIG. 1) allows MG2 speed to be decreasing while the vehicle speed is increasing, which may usually occur right after a shift point. Thus, the speed of MG2 is not a direct ratio to ground speed. For example, during a full throttle acceleration, a large amount of rotational energy may build up in the system due to high gear ratios. Immediately after a shift point, MG1 and/or MG2 act to take all that energy back out of the system, otherwise the built up rotational energy literally propels the vehicle even with zero fuel.

In one or more example embodiments, the MG2 160 is coupled via mechanical connections 105 to the variator 170, and to the inverter 150 via a three-phase electrical connection 107. Note that in the illustrated example embodiment, in contrast to the MG1 140, there is no mechanical connection between the MG2 160 and the engine 120. However, propulsion energy generated by the MG2 170 may still be used to add or oppose propulsion energy generated by the engine 120.

In at least one example embodiment, the output 190 includes additive and/or subtractive components of propulsion energy generated by each of the engine 120, the MG1 140, and the MG2 160. During various modes of operation, either or both of the MG1 140 or the MG2 160 supplement, oppose, or provide propulsion energy in place of some or all of the propulsion energy generated by the engine 120 under control of the TCU 110 operating in accordance with a path plan.

Some examples of possible modes in which elVT powertrain 100 may operate include, but are not limited to, a shared parallel drive mode, a sole drive mode of the internal combustion engine, a sole drive mode of the first electric machine, a sole drive mode of the second electric machine, a regenerative mode of the first electric machine, a sole drive mode of the second electric machine, or a coasting mode.

For example, during travel of a vehicle including elVT powertrain 100 along selected segments of a path of travel included in a path plan, the TCU 110 places the elVT powertrain 100 in an operating mode determined in accordance with the path plan until an energy storage device included in energy storage system 165 is discharged to a target state of charge (SOC).

In one or more example embodiments, the target SOC is achieved by the TCU 110 controlling the elVT powertrain 100 to operate in a regenerative mode during path segments having decreasing elevation, and in a motoring mode during path segments having at least one of an increasing elevation or a substantially unchanging elevation.

In various example embodiments, the TCU 110 receives input from internal and/or sensors 115 to determine current vehicle parameters, and uses the sensor inputs in conjunction with the path plan. For example a GPS position of a vehicle travelling along a vehicle path may be used to confirm the vehicles position and direction of travel, and a current SOC of the energy storage system 165 may be used to determine whether a target SOC has been reached.

Reference herein to a propulsion system may refer to the portion of the propulsion system that generates motive force, or include components that transfer that motive force to the outside world, such as wheels/tracks, axles, and/or other components that are well known in the art.

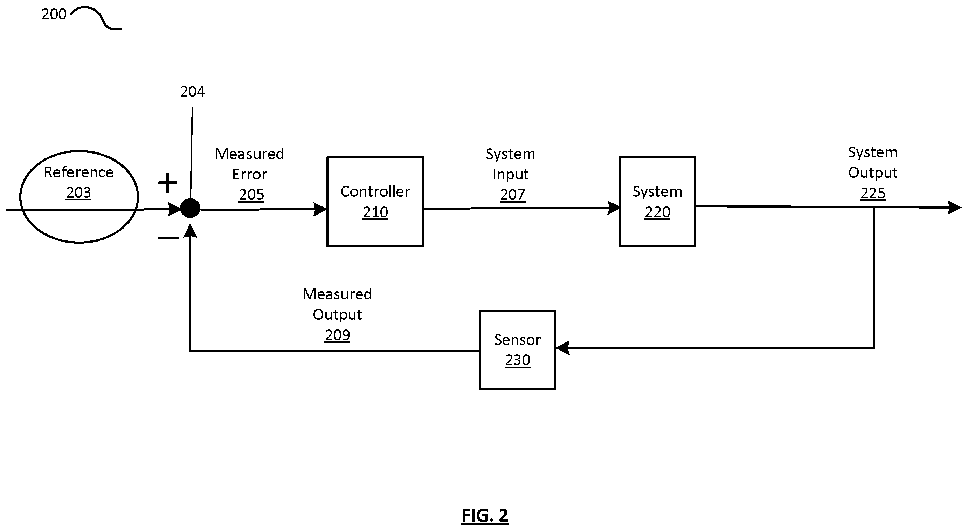

Referring next to FIG. 2, a control system 200 will be discussed according to one or more example embodiments. In one or more example embodiments, control system 200 is an online closed loop control system. Control system 200 may be implemented exclusively in hardware, or by some combination of hardware, software, firmware, or the like. In some example embodiments, the processing circuitry may include an application specific integrated circuit (ASIC) or graphics processing unit (GPU). In general, the reference input 203 may be a reference value obtained from a path plan, and may include, but is not limited to, a target SOC for an energy storage device, a geographic reference point indicating a beginning or end of an uphill, downhill, or flat segment of a path of travel, a target torque value, a target rotational velocity, a target ground speed, or the like.

At node 204, a measured error 205 is determined based on the reference input 203 a measured output 209 of a sensor 230. The measured error 205 is received at controller 210, which generates a system input 207, and provides it to system 220, which generates system output 225 in response to the system input 207. In at least one example embodiment, controller 210 is an instance of TCU 110. In one or more example embodiments, system input 207 may include a control signal for MG1 140, inverter 150, MG2 160, engine 120. For example, if the measured output 209 is a current SOC of an energy storage device, and the reference input 203 is a target SOC, the system input 207 may be a control signal commanding MG1 140 to provide a given amount of additional rotational velocity to the variator 170. The system 220 executes the command included in the system input 207 to generate system output 225. Sensor 230, which may include speed sensors configured to sense rotational speeds associated with shafts of the transmission 194, the gearbox, the internal combustion engine, or the variator. In some example embodiments, speed sensors may include, but are not limited to, a resolver, an encoder, a Hall Effect sensor, a magnetic field sensor, or some combination thereof. In some example embodiments, the sensors 230 may also include an inertial measurement unit and/or an accelerometer

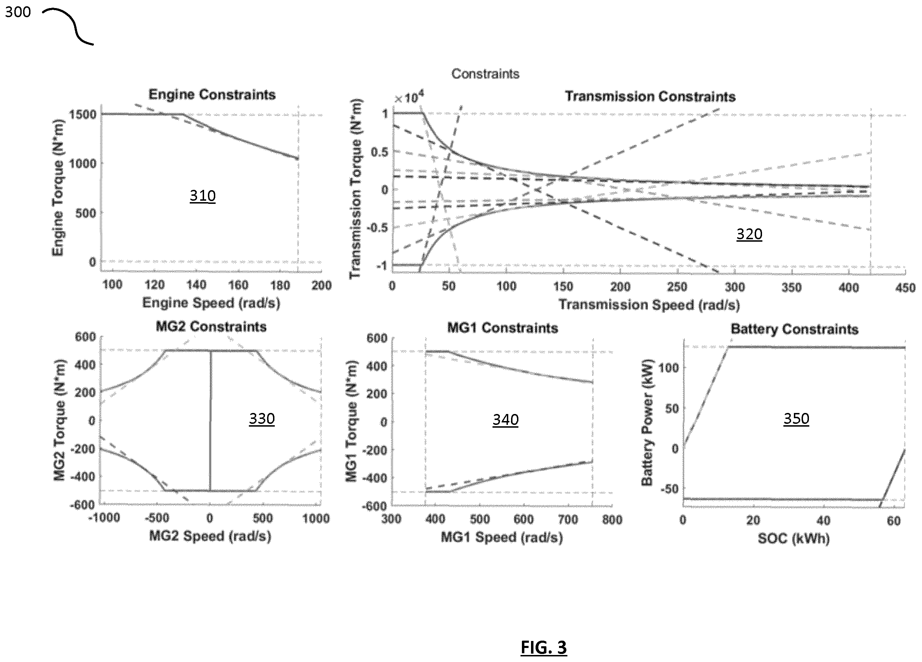

Referring next to FIG. 3 optimization constraints will be discussed with reference to a series of graphs 300 according to one or more example embodiments. Every currently realizable physical system has constraints within which it must operate. Examples of some such restraints within which various example embodiments operate include, but are not limited to the following: engine constraints such as maximum torque generation for particular engine speeds, as illustrated by engine constraints graph 310; transmission constraints such as transmission torque at particular transmission speeds, as illustrated by transmission constraints graph 320; MG2 160 constraints, such as maximum forward/reverse torque at particular forward/reverse motor generator speeds, as illustrated by MG2 constraints graph 330; MG2 160 constraints, such as maximum forward/reverse torque at particular forward/reverse motor generator speeds, as illustrated by MG2 constraints graph 330; MG1 140 constraints, such as maximum torque at particular motor generator speeds, as illustrated by MG1 constraints graph 340; and energy storage constraints, such as available battery power at particular battery SOCs, as illustrated by battery constraints graph 350.

As used herein, a "state limit" is an example of a constraint. For example, a "state" is something that cannot change instantaneously, for example because of inertia. Referring to the battery constraints graph 350, the state of charge (SOC), e.g. an amount of energy in a battery, may have limits of 0% SOC (0 kWh) or above 100% SOC, e.g. about 62 kWh in some example embodiments. In this example, the chemistry in the battery causes the constraints (state limits). More restrictive limits could be imposed depending on battery life constraints/limitations, open-circuit voltage constraints/limitations, or depth of discharge limitations/constraints.

For the rotational components such as the engine, the transmission, and/or the motor generators, angular velocity, e.g. shaft speeds) are "states" which cannot change instantaneously due to rotational inertia. Referring to engine constraints graph 310, the engine (and complements directly coupled) maximum speed may be subject to government regulations, pump speed limits, acceptable vibration, etc. Diesel engines are generally limited to ~2500RPM. Some hydraulic pumps are limited to ~2200RPM. Referring to MG2 constraints graph 330 and MG1 constraints graph 340, electric machines are generally limited to +-10k RPM due to bearing limitations, rotor material creepage risking contact with the stator, and/or rotor runout causing undesired vibrations. Referring to transmission constraints graph 320, the rotational velocity of a transmission output may be constrained by a vibrational limit associated with the transmission components, the transmission mountings and/or couplings. State limits may also apply to the output torque of the transmission, so that physical stress place on transmission components does not exceed a strength rating of the transmission. Various example embodiments may use additional or fewer constraints, or state limits, than those specifically discussed above.

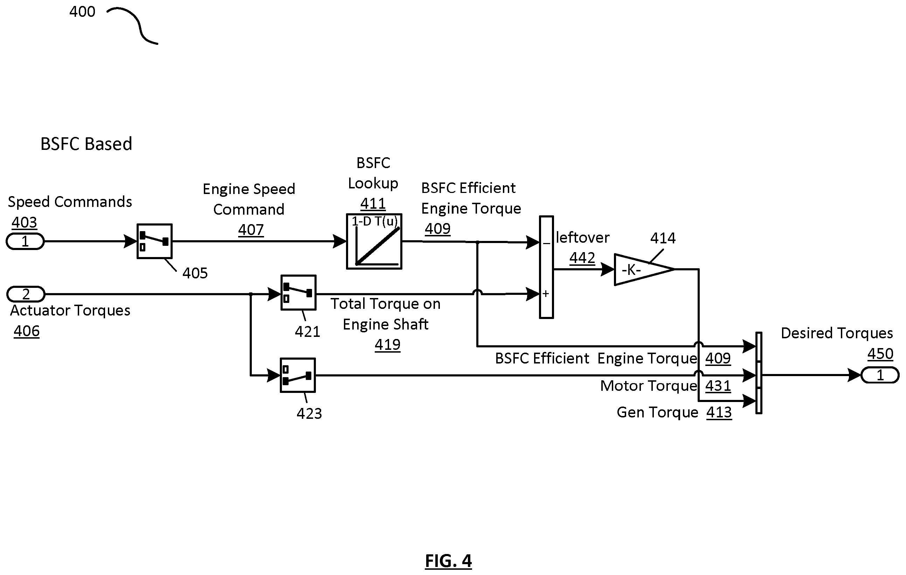

Referring next to FIG. 4, a control process 400 for generating desired engine, motor, and generator torques to optimize for brake-specific fuel consumption (BSFC) will be discussed according to one or more example embodiments. The control process 400 may be implemented by a controller, such as a TCU 110 (FIG. 1). A speed command 403 is received at a first controller input, and actuator torques 406 are received at a second controller input.

First selector 405 selects an engine speed command 407 from among a group of available engine speed commands, and speed commands 403. In at least one example embodiment, a "library" of pre-computed trajectories is generated, and multiple selected individual trajectories are combined in real time. Multiple different selection and combining techniques may be used. In some example embodiments, changes in operator inputs will trigger changing trajectories. For example, an operator transitioning from holding a low speed to a full throttle acceleration may result in selection of a different engine speed command from a data structure cross-referencing engine speed commands to operator input.

In some example embodiments, trajectories may also be switched based on machine conditions. A fully loaded articulated dump truck (ADT) acceleration will follow a different powertrain trajectory than an empty acceleration. We can distinguish between these two trajectories via weight sensors and inertial observer algorithms. For example, a path plan may include a first pre-defined trajectory for an empty ADT, and a second pre-defined trajectory for a fully loaded ADT. In such a case, selection of an engine speed command 407, total torque on engine shaft 419, and/or motor torque 431 may be selected from two different sets of available datasets defining the different trajectories. In this way, the path plan being used may indicate the available choices for each trajectory.

In some example embodiments, customer load profiles based on geographical information may dictate which engine speed command 407 is selected for particular received speed commands 403. Thus, when an operator switches from driving one course with a first powertrain trajectory to a second course with a second powertrain trajectory, different selections for the various selected outputs may be available/unavailable. In some example embodiments, distinguishing between the two trajectories may be accomplished using GPS data.

The group of available engine speed commands may include a set of engine speed commands available for a particular engine, a set of engine speed commands allowable under a selected path plan, or the like. The engine speed command 407 is used to perform a BSFC lookup 411 to determine a BSFC efficient engine torque 409 associated with the engine speed command 407.

The actuator torques 406 are used by a second selector 421 to select a total torque on engine shaft 419, and by third selector 423 to select a motor torque 431. In at least one example embodiment, the actuator torques 406 are sensed torques, or torques obtained from sensor inputs, the selections performed by second selector 421 and third selector 423 are based on a path plan. Selection of the total torque on engine shaft 419 by second selector 421 may be made by selecting the total torque on engine shaft 419 from among a group of available total torques on engine shaft that the path plan associates with particular driver inputs, customer load files, and/or machine conditions, as discussed above with reference to the first selector 405. For example, if a vehicle is travelling along a particular segment or portion of a directional path of travel, the path plan may specify targets for the total torque on engine shaft 419 and a motor torque 431.

In some example embodiments, a BSFC efficient engine torque 409 may not be sufficient to provide the total torque on an engine shaft indicated by a path plan. In such a case, a generator, such as MG1 140 (FIG. 1) acting in its capacity as a generator, may be used to supplement the torque generated by the engine. Thus, in at least one example embodiment, the leftover torque 442 indicates additional torque to be supplied by a generator (e.g. MG1 140 of FIG. 1) to achieve a total torque at the output of a variator 170 (FIG. 1) that complies with a path plan being implemented.

In the illustrated example embodiment, the BSFC efficient engine torque 409 and the total torque on engine shaft 419 are combined to generate a leftover torque 442. A proportionality module 414 applies a constant of proportionality to the leftover torque 442 to generate a generator torque 413.

The third selector 423 selects a motor torque 431 to be supplied by a motor, such as MG2 160 (FIG. 1) acting in its capacity as a motor in accordance with a plan. Selection of the motor torque 431 may be made by selecting a motor torque 431 from among a group of available motor torques that the path plan associates with particular driver inputs, customer load files, and/or machine conditions, as discussed above with reference to the first selector 405. The motor torque 431 selected by third selector 423 indicates additional torque to be supplied by a motor (e.g. MG2 160 of FIG. 1) to achieve a total torque, specified by a path plan, at the output of a variator 170 (FIG. 1).

Desired torques 450 indicate the contributing torques of individual powertrain elements that will be used to achieve a total torque (e.g. propulsion energy) for any particular portion of a path plan. So, for example, if the path plan specifies that for a given segment of the path plan a total torque of X is required, and the total torque is a combination of a BSFC efficient engine torque 409, a motor torque 431, and a generator torque 413, the controller may use the desired torques 450 to provide appropriate control signals to the elements of the powertrain, including engine 120 (FIG. 1), MG1 140 (FIG. 1), and MG2 160 (FIG. 1), so that the total torque specified by the path plan may be achieved.

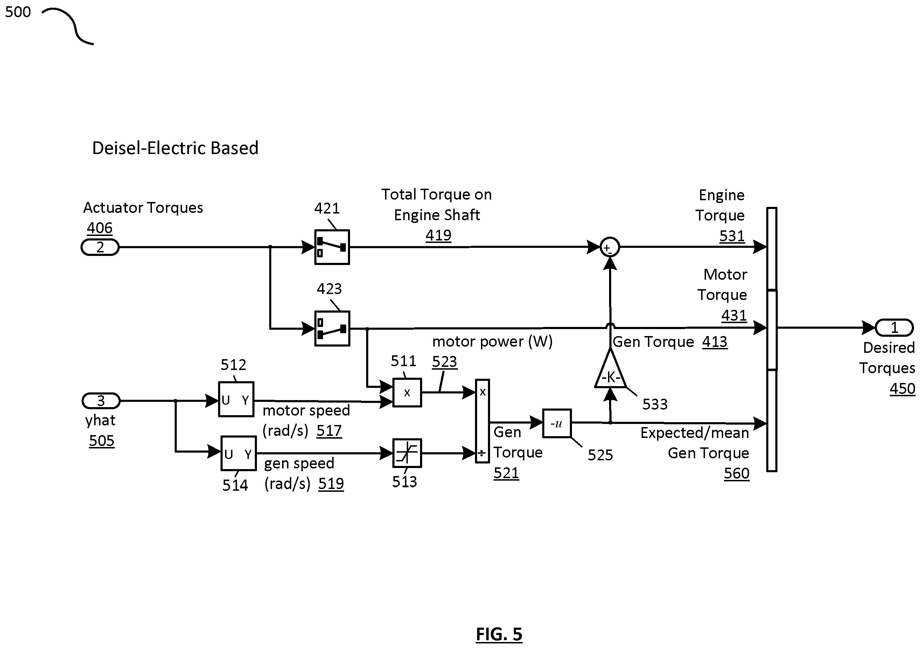

Referring next to FIG. 5, a control process 500 for generating desired engine, motor, and generator torques for a Diesel-Electric vehicle will be discussed according to one or more example embodiments. Actuator torques 406 are received at the second controller input, and estimated values 505, which include estimated values of motor speed and generator speed are received at a third controller input. A second selector 421 selects a total torque on the engine shaft 419 and a third selector 423 selects a motor torque 431 based on the actuator torques 406. The motor torque 431 is supplied to the first output as one of the desired torques 450.

The estimated values 505 of motor speed and generator speed are provided to a first conversion module 512 and to a second conversion module 514. The first conversion module 512 uses the estimated values 505 to generate a motor speed 517 having units of rad/s, and the second conversion module 514 uses the estimated values 505 to generate a generator speed 519 having units of rad/s. The motor speed 517 may refer to the speed of MG2 160 (FIG. 1), and the generator speed 519 may refer to the speed of MG1 140 (FIG. 1).

A first function module 511 receives the motor speed 517 and the motor torque 431 as input, and generates an output representing a motor power 523 representing a power of a motor (e.g. MG2 160 of FIG. 1). A second function module 513 applies a limiting function to the generator speed 519 to ensure that the generator speed 519 remains within the operational limits of the generator (e.g. MG1 140 of FIG. 1). The motor power 523 (e.g. of MG2) output by the first function module 511, and the generator speed (angular velocity) of the generator (e.g. MG1) output by the second function module 513, are used to determine a generator torque 521 associated with the generator (e.g. MG1). A third function module 525 determines an expected/mean generator torque 560 based on the generator torque 521, which is output as one of the desired torques 450.

A constant of proportionality is applied to the expected/mean generator torque 560 by fourth function module 533, and the result is combined with the torque on engine shaft 419 to determine engine torque 531. Engine torque 531 is output as one of the desired torques 450, in addition to motor torque 431 and expected/mean generator torque 560.

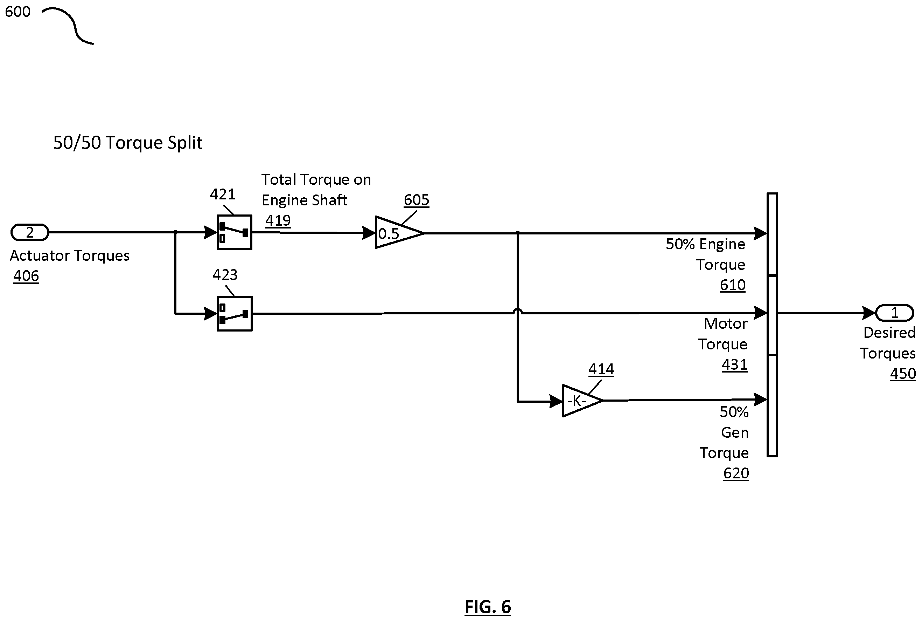

Referring next to FIG. 6, a control process 600 for generating desired engine, motor, and generator torques to maintain a 50/50 torque split will be discussed according to one or more example embodiments. In the illustrated example embodiment, actuator torques 406 are received at a controller input. The actuator torques 406 are used by the second selector 421 to select a total torque on engine shaft 419, and by the third selector 423 to select a motor torque 431. Factor module 605 determines 50% of the total torque on engine shaft 419, and outputs a 50% of engine torque signal 610.

Proportionality module 414 applies a constant of proportionality to the 50% total torque on engine shaft 419, and outputs a 50% generator torque signal 620. In this example embodiment, the generator (e.g. MG1 140 of FIG. 1) and the engine (e.g. engine 120 of FIG. 1) will provide half the total propulsion energy via torque applied via the engine's drive shaft, and the motor (e.g. MG2 160 of FIG. 1) will be available to provide any remaining propulsion energy by via torque applied through the variator 170 (FIG. 1).

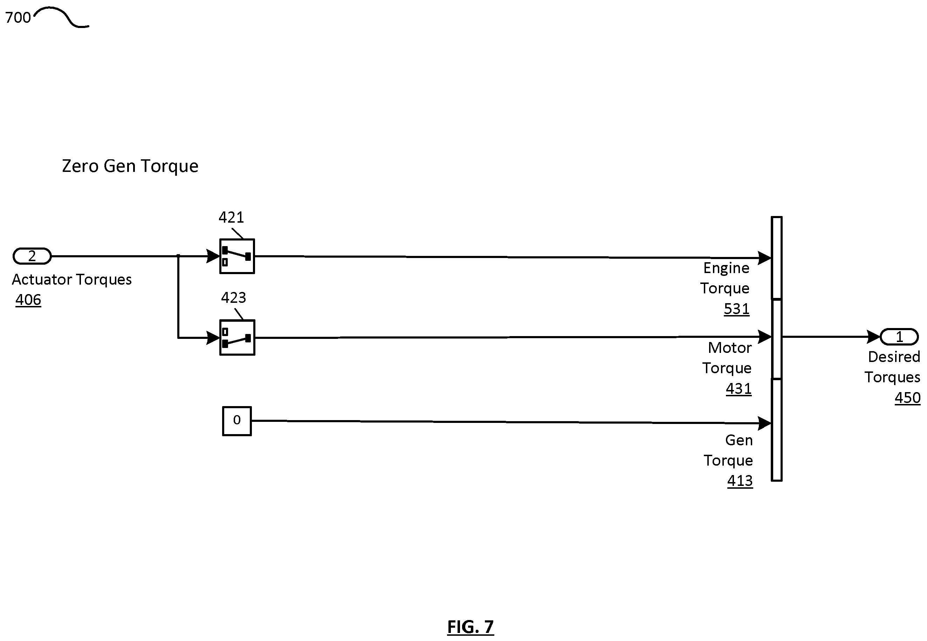

Referring next to FIG. 7, a control process 700 for generating desired engine, motor, and generator torques to maintain zero-generator torque will be discussed according to one or more example embodiments.

In the illustrated example embodiment, actuator torques 406 are received at a second controller input. The actuator torques 406 are used by the second selector 421 to select an engine torque 531, and by the third selector 423 to select a motor torque 431. In the illustrated example embodiment, the generator torque 413 is set to zero. The engine torque 531, motor torque 431, and generator torque 413 are output as desired torques 450, which may be used by TCU 110 to generate appropriate control signals for various elements of elVT powertrain 100 (FIG. 1).

In at least one example embodiment, a value for the generator torque 413 other than zero may be selected by a vehicle operator, selected based on a mode of operation, or automatically selected based on a path plan.

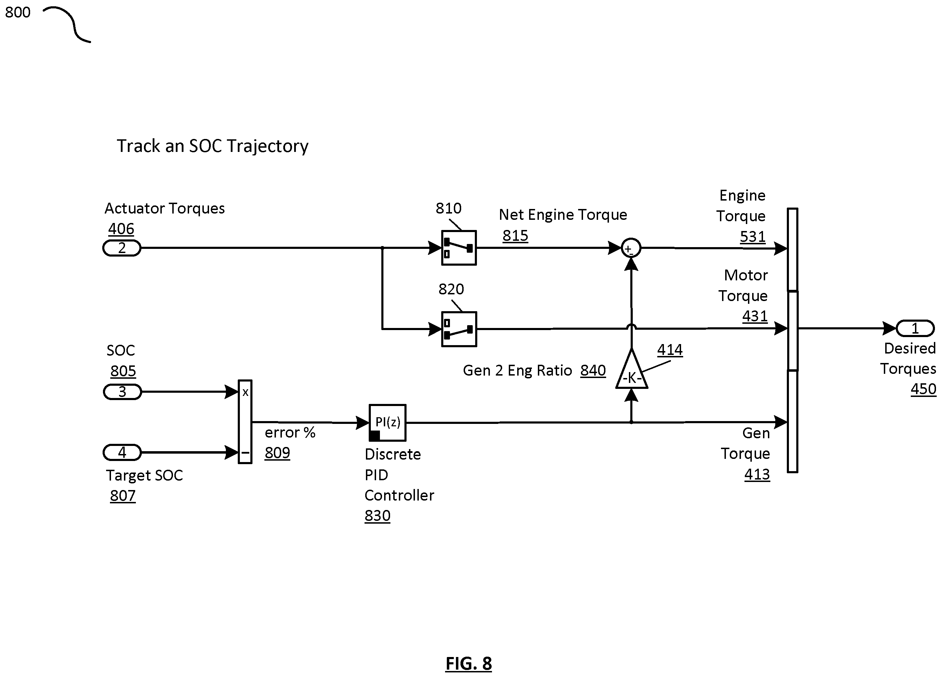

Referring next to FIG. 8, a control process 800 for generating desired engine, motor, and generator torques based on tracking an SOC will be discussed according to one or more example embodiments. Actuator torques 406 are received at net engine torque selector 810 and a motor torque selector 820. The net engine torque selector 810 selects a net engine torque 815, which is combined with an output of a proportionality module 414 to generate engine torque 531. The motor torque selector 820 selects a motor torque 431 based on the actuator torques 406. The engine torque 531 and the motor torque 431 are output as desired torques 450. In one or more example embodiments, selection of the net engine torque 815 by net engine torque selector 810 may be made by selecting the net engine torque 815 from among a group of available total net engine torques that the path plan associates with particular driver inputs, customer load files, and/or machine conditions, as discussed above with reference to the first selector 405. Similarly, selection of the motor torque 431 by the motor torque selector 820 may be made by selecting the motor torque 431 from among a group of available motor torques that the path plan associates with particular driver inputs, customer load files, and/or machine conditions, as discussed above with reference to the first selector 405.

In the illustrated example embodiment, the proportionality module 414 produces its output by applying a generator-to-engine ratio 840 to the generator torque 413. The generator torque 413 is determined by a discrete proportional-integral-derivative (PID) controller 830 based on a percent error 809. The percent error 809 is determined using a current state of charge (SOC) 805 and a target SOC 807, and represents a discrepancy between an energy storage device's current SOC 805, and the target SOC 807 for that energy storage device. The current SOC 805 may be derived from one or more voltage or current sensing circuits, while the target SOC may be obtained from a path plan. In overall operation, control process 800 attempts to maintain a given ratio between the engine torque and the generator torque while at the same time meeting an SOC target for an energy storage device.

It will be appreciated that different control processes may be selected for different operating modes of the elVT powertrain 100 (FIG. 1). In some example embodiments, a path plan may specify which of multiple operating modes available for use during particular segments of a directional path of travel, which modes are preferred for use during particular segments of a directional path of travel, which modes are mandatory for use during particular segments of a directional path of travel, which modes may be manually altered or overridden during particular segments of a directional path of travel, or the like. In some example embodiments, possible modes of operation are illustrated by FIGS. 4-7.

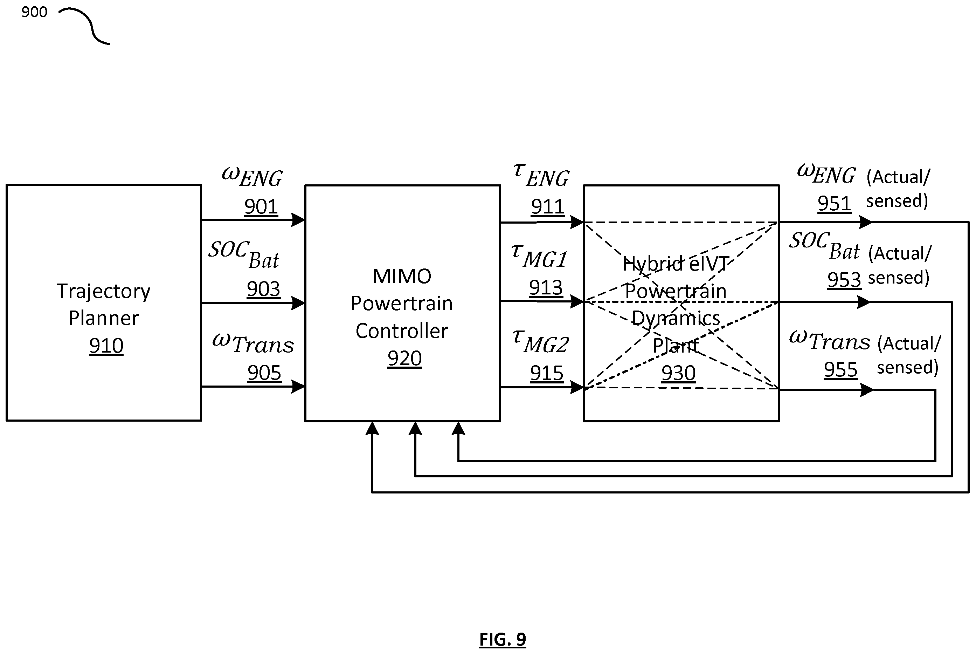

Referring next to FIG. 9, a system 900 will be discussed according to one or more example embodiments. System 900 includes a trajectory planner 910, a multiple input multiple output (MIMO) powertrain controller 920, and a hybrid elVT powertrain plant 930. The trajectory planner 910 provides target engine rotational velocities 901, target battery states of charge (SOC) 903, and target transmission rotational velocities 905 to the MIMO powertrain controller 920. It will be appreciated that the trajectory planner 910 may provide additional information to the MIMO powertrain controller 920.

The MIMO powertrain controller 920 provides engine control signals 911, first motor generator (MG1) control signals 913, and second motor generator (MG2) control signals 915 to the hybrid elVT powertrain plant 930. Note that the dotted lines represent physical connections within the hybrid elVT powertrain plant 930. The dotted lines indicate, for instance, that the engine control signals 911 affect the actual/sensed engine rotational velocity 951 and the actual/sensed transmission rotational velocity 955. Both MG1 control signals 913 and MG2 control signals 915 affect the affect the actual/sensed engine rotational velocity 951, the actual /sensed battery SOC 953, and the actual/sensed transmission rotational velocity 955.

Sensed values of the actual/sensed engine rotational velocity 951, the actual /sensed battery SOC 953, and the actual/sensed transmission rotational velocity 955 are fed back to the MIMO powertrain controller 920, which uses them in conjunction with the target engine rotational velocities 901, the target battery states of charge (SOC) 903, and the target transmission rotational velocities 905 to generate the control signals sent to the hybrid elVT powertrain plant 930.

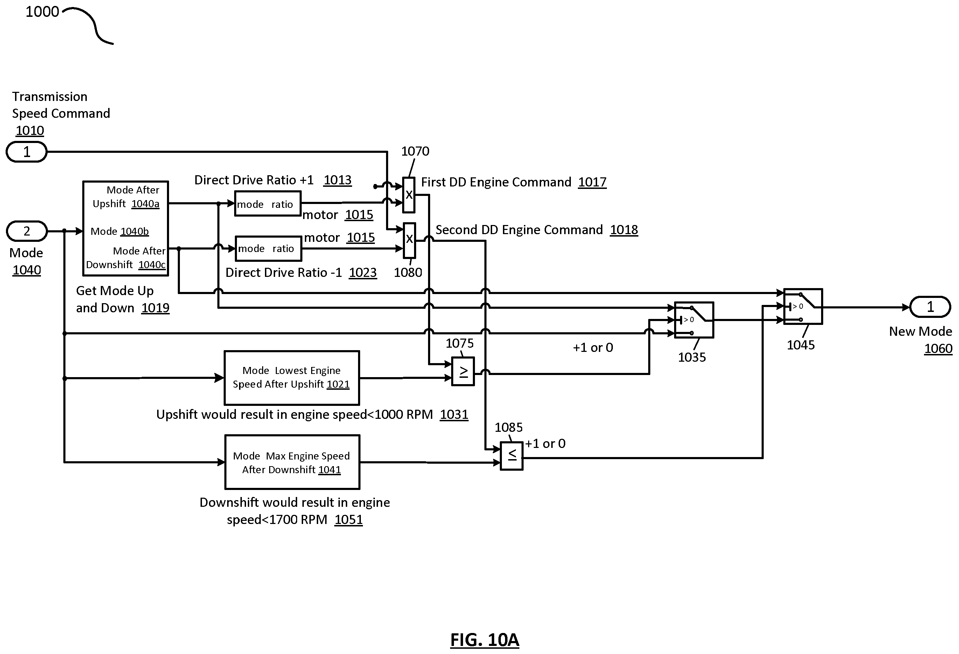

Referring to FIG. 10A, an elVT induced/delayed shifting implementation of a control function 1000 will be discussed according to one or more example embodiments. Some example embodiments disclosed herein use motor-generators to supply or remove excess kinetic energy from an elVT powertrain to introduce hysteresis into the shifting process of otherwise "synchronous" shifting transmissions. In general, the relationship between engine speed and torque affects shifting in an elVT powertrain transmission. Conventionally, synchronous shifting is completed at a precise instant to avoid discontinuities in the amount of kinetic energy in the system, which might otherwise result in significant disturbances in engine and/or transmission speeds. The use of motor-generators to supply or remove excess kinetic energy from an elVT powertrain may be used in some example embodiments to provide hysteresis in the shifting process by enabling requested shifts to be inhibited or induced. In some example embodiments, engine speed may be reduced by applying an opposing rotational force to the drive shaft using a motor generator to preemptively to induce a shift. Alternatively, the motor generator may provide supplemental rotational energy.

In some example embodiments, the kinematic relationship of the elVT's gearing, in combination with the additional power from a battery, enables running at any engine speed for all transmission output speeds. Some example embodiments disclosed herein provide a heuristic algorithm to compute a target engine speed. In at least one example embodiment, the target engine speed is a function of the current transmission output. The relationship depends on the current mode of the transmission and is a fixed scalar of the transmission output speed.

Benefits of the various control processes/algorithms disclosed herein include providing a way to maintain drivetrain efficiency, minimize recirculating power and energy conversion, targeting an MG2 speed of 0 RPM, and keeping power produced by the engine mechanical.

In one or more example embodiments, if a transmission speed command includes a commanded torque or a commanded speed that would result in a shift in gear ratios, the shift may be inhibited by providing supplemental rotational energy to an engine shaft of an internal combustion engine. In some example embodiments, the shift may be inhibited for at least two sampling intervals, e.g. the current sampling interval and a next sampling interval, to account for transient changes in the rotational speed of an engine shaft of the internal combustion engine. A sampling interval may be about 5 ms in some example embodiments, but the sampling interval may have a greater or lesser duration consistent with sensor and processing circuitry operational characteristics.

In some example embodiments, an inhibited shift may be withdrawn, thereby allowing the shift to occur, if it becomes apparent that a change in the rotational speed of the engine shaft is no longer considered transient. In at least one example embodiment, a change in the rotational speed of the engine shaft is considered non-transient after it persists for a threshold number of successive sampling intervals. In some example embodiments this threshold may be between 2 and 10 sampling intervals, but other suitable thresholds may be used depending on the amount of shift-hysteresis to be introduced.

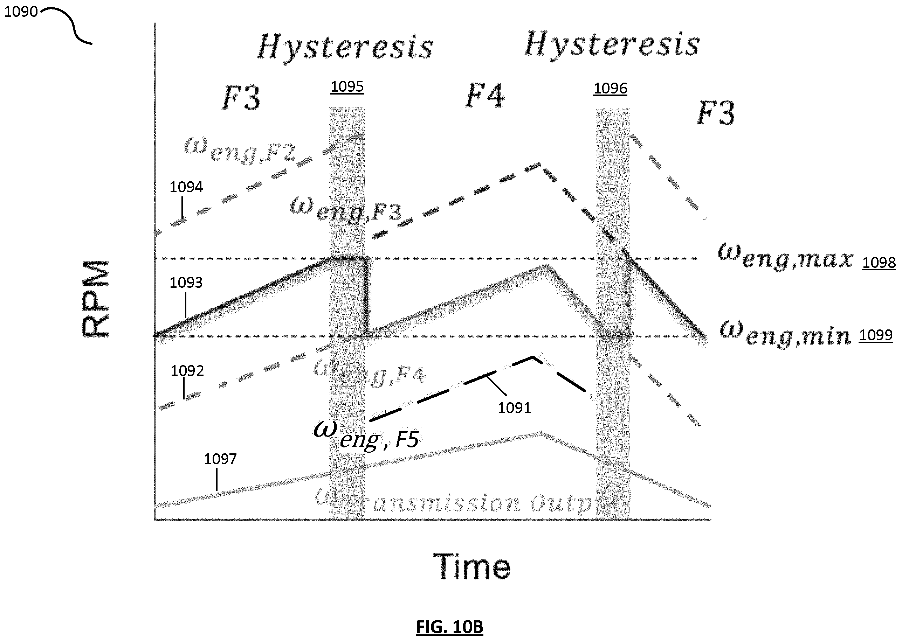

In an example of control function 1000, a transmission speed command 1010 is received at a first input of a controller, and mode information 1040 is received at a second input. In one or more example embodiments, the mode information 1040 includes a current mode of operation 1040b in which the transmission is now operating, an after upshift mode 1040a in which the transmission will operate after an upshift, and/or an after downshift mode 1040c in which the transmission will operate after a downshift. Operating modes may be more broadly referred to as "regenerative modes," e.g. braking or coasting, in which an energy storage device is recharged, "battery assist modes" in which the energy from the energy storage device is used by one or more motor generators to supplement the rotational energy provided by an internal combustion engine, and "motoring modes" in which the internal combustion engine provides propulsion without assistance from a motor generator, and without recharging the energy storage device. The modes referred to in FIG. 10 are, in some example embodiments, the operating modes previously discussed with reference to FIGS. 4-8, which illustrate rule-based power-splits to determine how much power should be supplied by a battery vs. how much power should be supplied by an internal combustion engine. In other example embodiments, rule-based power splits other than those disclosed in FIGS. 4-8 may be used.

The direct drive ratio +1 module 1013 is used to determine the speed of a motor 1015 in the event of an upshift. The direct drive ratio +1 module 1013 uses the appropriate control process for the indicated after upshift mode 1040a to determine a speed of the motor 1015 in the event an upshift is implemented. In at least one example embodiment, engine speed/transmission speed ratios which result in MG2 operating at 0 RPM for each forward and reverse gear ratio are precomputed offline. Note that operation of MG2 at 0 RPM may sometimes be referred to as "Direct Drive." The ratio of the mode above and below the current mode may be looked up from a table. Those ratios are multiplied by a current transmission speed to know what resulting engine speed would maintain Direct Drive after an upshift/downshift. If the resulting engine speed is outside an acceptable range, no shift is triggered.

Similarly, the direct drive ratio -1 module 1023 is used to determine the speed of the motor 1015 in the event of a downshift. The direct drive ratio -1 module 1023 uses the appropriate control process for the indicated after downshift mode 1040c to determine a speed of the motor 1015 in the event an upshift is implemented. In at least one example embodiment, motor 1015 is an example of MG2 160 (FIG. 1).

Upshift command generation module 1070 generates a first engine command 1017 based on transmission speed command 1010 and the output of the direct drive ratio +1 module 1013. Downshift command generation module 1080 generates a second engine command 1018 based on transmission speed command 1010 and the output of the direct drive ratio -1 module 1023. In one or more example embodiments, the first engine command 1017 and the second engine command 1018 include commands to set particular engine speeds.

A minimum speed module 1021 determines, based on the current mode of operation 1040b, a minimum engine speed 1031 if an upshift were performed in the current mode of operation 1040b. A maximum speed module 1041 determines, based on the current mode of operation 1040b, a maximum engine speed 1051 if an upshift were performed in the current mode of operation 1040b. In one or more example embodiments, the minimum engine speed ensures the engine doesn't drop low enough to where it's easy to stall and has enough torque available to maintain current speed. The maximum engine speed is constrained by other drivetrain components. In some example embodiments hydraulic pumps directly coupled to a transmission PTO are one of those constraints, because limiting hydraulic pumps speeds may extend component life to achieve durability goals.

In some example embodiments, the minimum and maximum speeds are set such that there is hysteresis between the triggered shifts. For example, assume an upshift is triggered because the current engine speed is 1700 RPM and the resulting engine speed after an upshift would be 1200 RPM in some example embodiments. After the shift, the new downshift threshold would be 1100 RPM, which would result in an engine speed of 1800 RPM in some example embodiments.

The first comparison module 1075 determines whether an engine speed commanded by the first engine command 1017 equals or exceeds the minimum engine speed 1031. If so, the output of the first comparison module 1075 is set to +1. If, however, the engine speed commanded by the first engine command 1017 is less than the minimum engine speed 1031, the output of the first comparison module 1075 is set to 0.

The second comparison module 1085 determines whether an engine speed commanded by the second engine command 1018 is less than or equal to the maximum engine speed 1051. If so, the output of the second comparison module 1085 is set to +1. If, however, the engine speed commanded by the second engine command 1018 is greater than the maximum engine speed 1051, the output of the second comparison module 1085 is set to 0.

A first mode selector 1035 is coupled to receive the after upshift mode 1040a at a first input, the current mode of operation 1040b at a second input, and the output of the first comparison module 1075 at a control input. If the value of the control input, i.e. the output of the first comparison module 1075 is 0, the first mode selector 1035 couples the after upshift mode 1040a to the second input node of a second mode selector module 1045. Conversely, if the value of the control input, i.e. the output of the first comparison module 1075 is 1, the first mode selector 1035 couples the current mode of operation 1040b to the second input node of the second mode selector module 1045.

The second mode selector module 1045 uses the output of the second comparison module 1085 as a control input to select between the after downshift mode 1040c and the mode output by the first mode selector 1035. The output of the second mode selector module 1045 will be one of the current mode of operation 1040b the after upshift mode 1040a, or the after downshift mode 1040c. For example, a zero applied to the control input of the second mode selector module 1045 will cause new mode 1060 to be set to the mode after downshift mode 1040c. Conversely, a one applied to the control input of the second mode selector module 1045 will cause new mode 1060 to be set to whichever mode is output from first mode selector 1035.

In one or more example embodiments, hysteresis may be introduced into the shifting process of an elVT by employing control function 1000.

Referring next to FIG. 10B, a graph 1090 illustrating hysteresis associated with a shift will be discussed according to one or more example embodiments. Graph 1090 illustrates engine speeds, e.g. rotational velocities, in various gear ratios, and transmission output speed 1097, where the solid lines represent desired engine speeds. In particular forward gear F2 engine speed 1094, forward gear F3 engine speed 1093, forward gear F4 engine speed 1092, and forward gear F5 engine speed 1091. Periods of hysteresis at shift points are illustrated by first period 1095 and second period 1096.

As illustrated, in forward gear F3, the forward gear F3 engine speed 1093, is withing operating limits defined by maximum engine speed 1098 and minimum engine speed 1099. The forward gear F2 engine speed 1094, forward gear F4 engine speed 1092, and forward gear F5 engine speed 1091 are outside of the operating limits when gear F3 is engaged.

As the forward gear F3 engine speed 1093 increases over time, maximum engine speed 1098 is reached. However, hysteresis is introduced during the first period 1095 by inhibiting the shift. As discussed throughout this disclosure, inhibiting a shift may be accomplished in some example embodiments by supplementing the rotational energy of the engine with rotational energy from a motor generator/electric machine. At the end of the first period 1095, the an upshift to forward gear F4 is allowed or induced by rapidly decreasing engine speed with the assistance of an electric machine removing rotational energy from the system and charging the battery. The supporting rotational energy supplied by the electric machine is removed, and the engines rotational velocity is illustrated by forward gear F4 engine speed 1092. Note that forward gear F3 engine speed 1093 is now greater than the maximum engine speed 1098.

Over time, the engine speed increases, and then decreases until it reaches the beginning of second period 1096. A downshift that would otherwise occur at this point, is inhibited by using an electric machine to supply opposing rotational energy (e.g. absorb rotational energy) from the engine. At the end of second period 1096, the electric machine withdraws its opposition to the engine's rotation, and allows the upshift to occur.

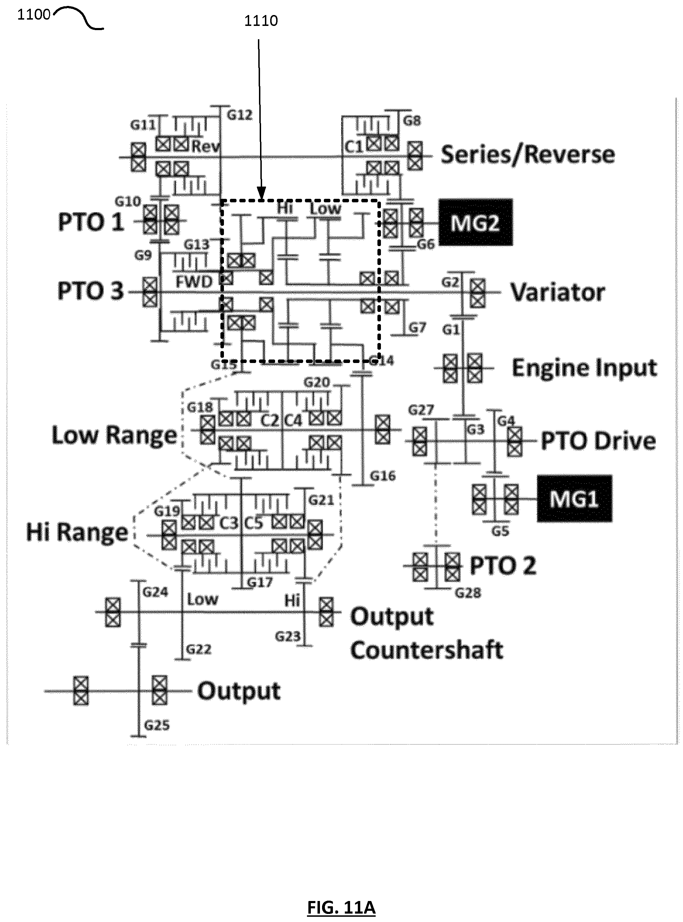

Referring next to FIG. 11A is a stick diagram illustrating an elVT transmission 1100 will be discussed according to one or more example embodiments. The stick diagram provides a schematic representation showing physical connections, including clutches, gears, power take offs (PTOs), two motor generators, and a variator 1110 included in the elVT transmission 1100 and used as part of elVT powertrain 100. Those of skill in the art would be able to interpret and use the stick diagram of FIG. 11A, in conjunction with the remaining portions of the disclosure, to make and use a transmission capable of implementing various example embodiments disclosed herein without undue experimentation. In one or more example embodiments, the clutches illustrated in FIG. 11A may be activated by a controller to select a mode of operation. For example a clutch associated with a motor generator may be used to cause the motor generator to engage a rotating shaft to generate electricity to be returned to an energy storage device in a regenerative mode.

Additional information about elVT transmission 1100 may be found in US Patent number 11,613,246, entitled, "Power Control System With Engine Throttle Shift Function, filed on January 21, 2021, the contents of which is hereby incorporated by reference in its entirety for all purposes. It will be appreciated that in other example embodiments, other variants of the elVT transmission 1100, or transmissions other than the elVT transmission 1100 may be used. Examples of other transmissions that may be useful in some example embodiments may be found in US Patent No. 11,607,948, entitled, "Electronically-variable power shift transmission for work vehicles, filed on December 22, 2021, and in US Patent No. 11,585,412, entitled, "Electronically-variable, dual-path power shift transmission for work vehicles," filed December 22, 2021, both of which are hereby incorporated by reference in their entirety for all purposes.

Referring next to FIG. 11B, a variator 1110 will be according to one or more example embodiments. The variator 1110 includes a sun gear 1125, planet gears 1145, a planet carrier 1135, a planet ring 1115, and a shaft 1155. A torque input 1156 applied to the shaft 1155 results in a torque output on the planet ring 1115 and the planet carrier 1135. A torque input 1116 applied to the planet ring 1115 will result in a torque output on the shaft 1155 and the planet carrier 1135. A torque input 1136 applied to the planet carrier 1135 will result in a torque output on the shaft 1155 and the planet ring 1115.

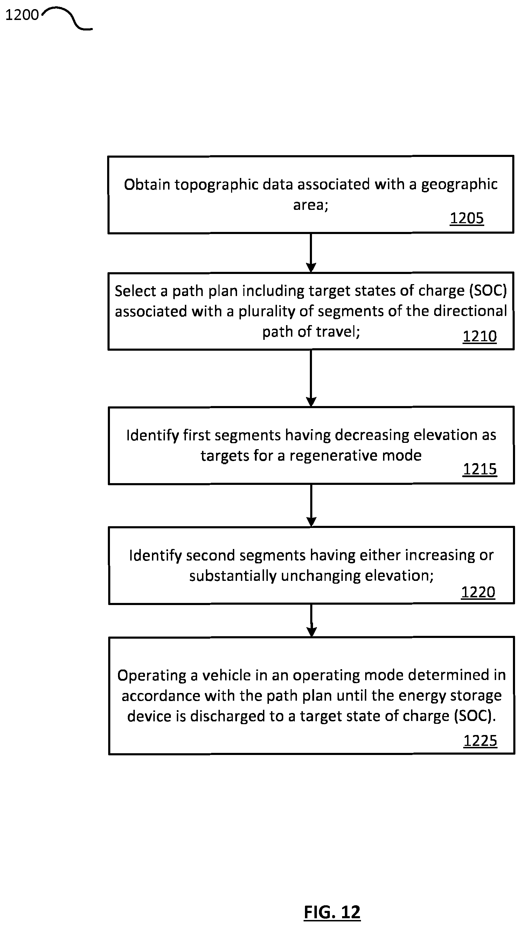

Referring next to FIG. 12, a method 1200 of controlling a vehicle based on a path plan will be discussed according to one or more example embodiments. As illustrated by block 1205, topographic data associated with a geographic area is obtained. The topographic data may be obtained from a survey including one or more of GPS coordinates or waypoints along a directional path of travel, from data recorded during previous work done by the same vehicle that will be using a path plan associated with the topographic data, from data recorded during previous work done by another vehicle, at a worksite where the vehicle using the path plan will be operating, or the like. The topographic data may include, but is not limited to, ambient temperatures, elevations, slopes, distances, roll angles, tilt angles, yaw angles, and similar information associated with the directional path of travel.

As illustrated by block 1210, a path plan for a directional path of travel to be used by a particular vehicle may be selected based on the topographic data. The path plan may include information about an entire route to be traveled by the vehicle, or a portion thereof. In one or more example embodiments, a path plan is vehicle specific. According to at least one example embodiment, a selected path plan will include target states of charge (SOC) associated with a plurality of segments of the directional path of travel. There may be any number of segments in the path of travel, with the number of segments being determined in some example embodiments based changes in terrain, for example a change in the steepness of a hill, or a change from a downhill direction to a substantially level direction.

As illustrated by block 1215, first segments in the directional path of travel having a decreasing elevation can be identified as targets for use of a regenerative mode in which energy is returned to an energy storage device. Regenerative modes may include regenerative braking modes, coasting modes, or the like. Note that in some example embodiments, travelling over a downhill segment may not guarantee entry into a regenerative mode.

As illustrated by block 1220, second segments in the directional path of travel having increasing elevation or substantially unchanging elevation may be identified as segments during which energy from the battery may be used to supplement energy from the internal combustion engine.

As illustrated by block 1225, during travel of the vehicle along selected segments of the plurality of segments, the vehicle may be operated in an operating mode determined in accordance with the path plan until the energy storage device is discharged to a target state of charge (SOC). In some example embodiments, individual segments of the directional path of travel may include separate SOC targets. In other example embodiments, an overall SOC for an energy storage device may be set. For example, a target SOC for the entire vehicular trajectory may be set so that at the end of directional path of travel the SOC of a battery may be the same as a starting SOC. In some example embodiments, SOC targets for both individual segments and an entire path of travel may be included in the path plan.

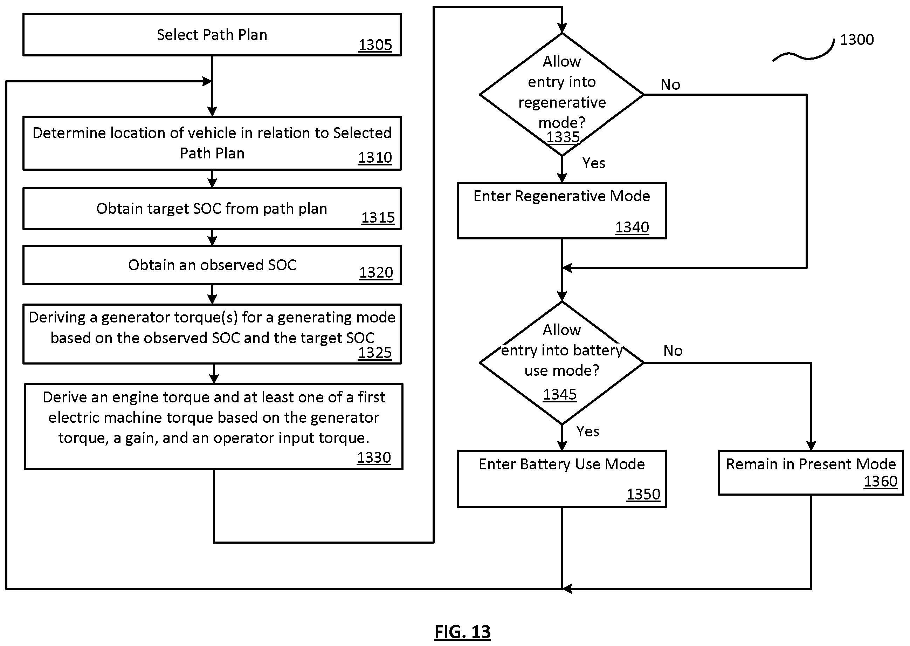

Referring next to FIG. 13, another method 1300 of controlling a vehicle based on a path plan will be discussed according to one or more example embodiments.

As illustrated by block 1305, a path plan is selected. Selection of the path plan may be dependent on the characteristics and limitations of a vehicle that will be using the path plan. Selection of the path plan may also depend on the work being performed by the vehicle, and a particular output to be optimized or prioritized. Examples include, the speed of vehicle being prioritized to complete the work more quickly, prioritizing fuel consumption. Multiple different path plans optimizing different factors may be available to choose from. Multiple different path plans for different paths of travel through or within a worksite may also be available, and so on. In some example embodiments, a path plan may be a point to point path plan, while other path plans may be based on a coverage area. In some example embodiments, multiple previously recorded path plans that have been used historically to complete a relevant task within the area may be available for selection.

As illustrated by block 1310, as a vehicle is travelling along a directional path of travel, the vehicle may locate its position relative to the directional path of travel to know when it has reached a particular segment of the path.

As illustrated by block 1315, an appropriate target, such as a target SOC associated with the segment of the path along which the vehicle is currently traveling may be delivered from a trajectory planner 910 (FIG. 9) to a controller responsible for controlling the vehicle's elVT powertrain, such as MIMO powertrain controller 920 (FIG. 9). In some example embodiments, each target SOC may be determined based on a slope of segment of the path of travel, a length of the segment, a ground speed of the vehicle, and/or a capacity to recharge the energy storage device during a regenerative mode. In some example embodiments, a target SOC may be a target SOC for a conclusion of a path segment, or an end of an entire path of travel.

As illustrated by block 1320, an observed SOC may be obtained from one or more sensors by the controller.

As illustrated by block 1325, one or more motor generator torques for one or more of a first electric machine or a second electric machine may be derived by the controller for a regenerative mode based on the observed SOC and the target SOC. The motor generator torques may be determined as illustrated by FIGS. 4-8.

As illustrated by block 1330, an engine torque and at least one of a first electric machine torque or a second electric machine torque to be applied in a selected mode may be derived by the controller, where derivation of the engine torque is based on the generator torque, a gain, and an operator input torque. The engine torques and electric machine torques may be determined as illustrated by FIGS. 4-8.

As illustrated by block 1335, during travel on a downhill segment of the path of travel, which has previously been identified as a target for a regenerative mode, a check is made by the controller to determine whether to allow entry into the regenerative mode. For example, entry into the regenerative mode may be prevented in response to the energy storage device satisfying an SOC full threshold during a time the vehicle is traversing at least one of the first segments of the plurality of segments. Entry into a regenerative mode may also be disallowed where the generator is needed to supply supplemental torque in addition to the torque being supplied by the internal combustion engine. Entry into the regenerative mode may also be disallowed if an SOC full threshold is satisfied. In some example embodiments, SOC battery threshold is between about 90% and 100%.

As illustrated by block 1340, if entry into the regenerative mode is permitted at block 1335, the elVT powertrain is placed into a regenerative mode by the controller. If, however, the decision at block 1335 indicates that entry into the regenerative mode is disallowed, method 1300 proceeds to block 1345.

As illustrated by block 1345, a check is made by the controller to determine whether to allow entry into a battery use mode. Entry into the battery use mode may be permitted if the SOC satisfies the SOC full threshold during a time the vehicle is traversing an uphill or level segments of the path of travel. If entry into the battery use mode is allowed, method 1300 proceeds to block 1350.

As illustrated by block 1350, a battery use mode is initiated by the controller. During a battery use mode, an energy storage device is used to provide power for at least a portion of vehicle propulsion. In some example embodiments, the battery use mode includes using power provided by the energy storage device to engage a propulsion mechanism of the vehicle through a power take-off (PTO).

As illustrated by block 1360, if the entry into the regenerative mode and the battery use mode are both disallowed, the vehicle continues to operate in its current mode, which may be a motoring mode in which the internal combustion engine provides propulsion energy unsupported by a motor generator, and without a motor generator using a part of the engines energy to recharge the energy storage system.

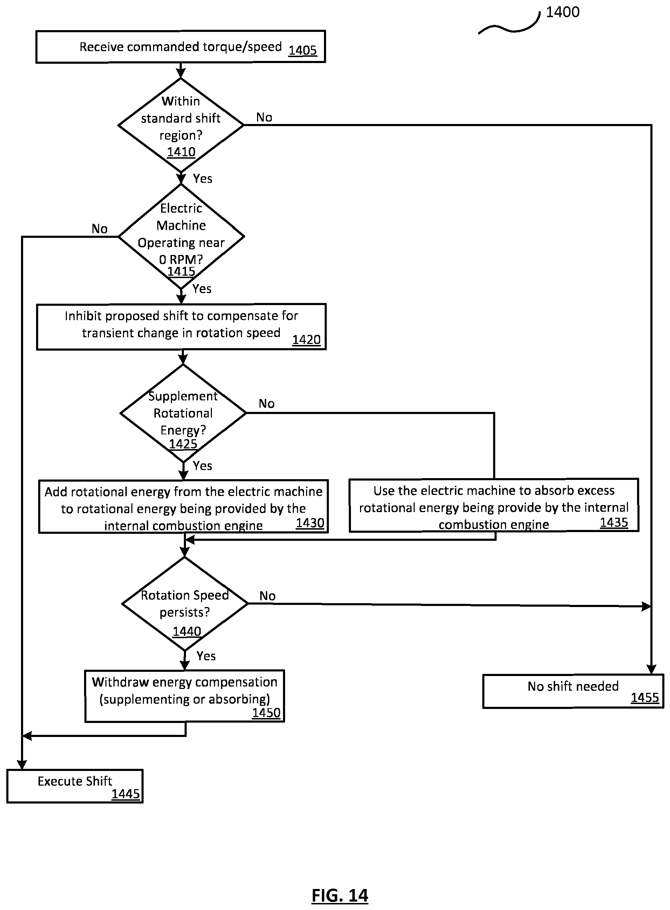

Referring next to FIG. 14, a method 1400 of shifting an elVT transmission according to one or more example embodiments will be discussed.

As illustrated by block 1405, a commanded torque or speed is received at a controller, such as TCU 110 (FIG.1).

As illustrated by block 1410, a check is performed by the controller to determine whether the commanded torque or speed is within a standard shift region for a proposed shift between a first gear ratio and a second gear ratio during a present sampling interval. If the commanded torque or speed is not within a standard shift range, no shift is needed, and method 1400 proceeds to block 1455. As used herein, the term "shift region" refers to a portion of a torque curve associated with a particular vehicle. The "shift region" is a portion of the torque curve in which a change in gear ratio is used to establish a desired combination of torque and speed. Thus, a commanded speed increase/decrease may result in a proposed shift, which if executed will alter a gear ratio so that a desired torque is maintained. Conversely, if the controller receives a commanded torque increase/decrease that would necessitate a gear change to maintain a desired speed, the commanded torque increase may result in a proposed shift. In some example embodiments, a controller evaluates a proposed shift, as subsequently illustrated, to determine whether the proposed shift is to be executed. In at least one example embodiment, a sampling interval refers to a period of time between sampled torques, speeds, angular velocities, or the like, being generated by a sensor and/or received at the controller.

In at least one example embodiment, the commanded torque and/or the commanded speed are associated with a transient change in a rotational speed of an engine shaft of an internal combustion engine. For example, if a sensor indicates the rotational speed of the engine shaft has decreased since the last sampling period, the controller may determine that the torque should be increased, but if the engine is already operating near its upper RPM limit, increasing the RPM of the engine may not be a viable option.

As illustrated by block 1415, if the commanded torque or speed is within a standard shift range, a check is made by the controller to determine whether a motor generator or other electric machine that may be needed to provide supplemental or opposing torque is operating near zero RPM. In some example embodiments, operation near zero RPM indicates that the electric machine is capable of supplying the necessary torque. In an example embodiment, operation near zero RPM includes operating in a range of RPM that includes zero RPM. The range of RPM including zero RPM includes operations in which the electric machine, , *e.g.* MG1 140 or MG2 160 of FIG. 1) is rotating in an additive direction to support the rotational energy of the engine, rotating in an opposite direction to oppose the rotational energy of the engine, or not rotating. In some example embodiments, "near zero" refers to operation within about 1% of the current rotational velocity of the engine drive shaft. Thus, for example if the engine is operating at 1,700 RPM, an electric machine operating at +/-17 RPM may be considered to be operating near zero RPM. In some example embodiments, if the electric machine is not operating near zero RPM, but the commanded torque or speed is within a standard shift range, the shift may be executed, as indicated by block 1445.

As illustrated by block 1420, if the commanded torque or speed is within a standard shift range and the electric machine is operating near zero RPM, the proposed shift is inhibited by the controller for at least the current sampling interval and the next sampling interval. In some example embodiments, the proposed shift is one of one or more proposed shifts between one or more first gear ratios and one or more second gear ratios, and the controller inhibits the proposed shift in in response to an average or a mean frequency of the one or more proposed shifts during an operating session of the vehicle being fewer than a threshold number proposed shifts. The threshold number of proposed shifts may be specified by a path plan, or otherwise.

Inhibiting the proposed shift includes preventing a change between a first gear ration and a second gear ratio. In one or more example embodiments, inhibiting the shift is accomplished by compensating for a transient change in a rotational speed of an engine shaft of the internal combustion engine, by providing compensating-rotational-energy, e.g. compensatory rotor speed or compensatory torque, to the engine shaft of the internal combustion engine. The compensating rotational energy may include either providing additional rotational energy to the drive shaft, or absorbing excess rotational energy. In at least one example embodiment, the compensatory rotor speed or the compensatory torque is supplied by the electric machine prior to one or more clutches being activated in response to an observed reduction in engine speed.

In some example embodiments, inhibiting the proposed shift may be considered to establish a modified temporary modified shift region between a first gear ratio and a second gear ratio in accordance with a hysteresis function that suspends the proposed shift while the electric machine is energized to compensate for the proposed shift. In other words, the minimum and maximum speeds may be set such that there is hysteresis between the triggered shifts. For example, assume an upshift is triggered because the current engine speed is 1700 RPM and the resulting engine speed after an upshift would be 1200 RPM. After the shift, the new downshift threshold would be 1100 RPM (which would result in an engine speed of 1600 RPM).

If the vehicle does slow down below 1100 RPM, a downshift would occur and the resulting engine speed would be 1600 RPM. There is still a 100 RPM transmission speed "hysteresis" before the upshift would occur again. This hysteresis avoids staying right at a shift point, and gear hunting up and down. Hysteresis is not conventionally implemented in elVT transmissions with synchronous shift points, as disclosed by various example embodiments herein, because the ability to implement hysteresis while also providing full vehicle power is performed using energy from a battery or other energy storage source in accordance one or more of the example embodiments disclosed herein.

As illustrated by block 1425, a check is made to determine whether additional rotational energy is needed to inhibit the shift. If yes, then method 1400 proceeds to block 1430. As illustrated by block 1430, rotational energy from an electric machine is added to the rotational energy provided by the internal combustion engine. For example, if the proposed shift is a downshift, the controller may place an electric machine in a motoring mode until an observed engine speed less than or equal to a maximum speed threshold is attained. If the energy storage device has a state of charge (SOC) satisfying a threshold minimum SOC, the electric machine may accelerate a rotational speed of the engine shaft during without shifting from a current gear ratio by converting electrical energy to rotational energy. In some example embodiments, the maximum speed threshold is 1,700 RPM, and/or the threshold maximum SOC is about 100%.

If the check at block 1425 indicates that inhibiting the shift does not require adding rotational energy, the method 1400 proceeds to block 1435, where the electric machine is used to absorb excess rotational energy. For example, if the proposed shift is an upshift, the controller may place the electric machine in a regenerative mode until an observed engine speed greater than or equal to a minimum threshold engine speed is attained. During operation in the regenerative mode, if an energy storage device has a state of charge (SOC) satisfying a threshold maximum SOC, the electric machine reduces a rotational speed of the engine shaft without shifting from a current gear ratio by converting rotational energy of the engine shaft to electrical energy, which is then used to charge the energy storage device. In some example embodiments, the minimum threshold engine speed is greater than or equal to about 1000 RPM, and/or the threshold minimum SOC is between about 50% SOC to about 75%.

As illustrated by block 1440, after inhibiting the shift for at least two sampling intervals, a check is made by the controller to determine whether the transient change in rotational speed is transient. If the change in rotational speed persists beyond a threshold number of sampling intervals, for example between 3 and 10 sampling intervals, the change in rotation speed is deemed non-transient by the controller, and as illustrated by block 1450, the energy supplied by the electric machine (whether additive or oppositional) is withdrawn, and the shift is executed, as illustrated by block 1445.

If, however, the transient change in rotational speed does not persist beyond the threshold number of sampling intervals, no shift is needed and the method 1400 proceeds from block 1140 to block 1455.

Referring next to FIG. 15 a processing device 1500 will be discussed according to one or more example embodiments.

Processing device 1500 may be used to implement any of the above example embodiments in which processing of data, signals, or other information is needed or desired. For example, processing device 1500 may be implemented as controller 1520, such as TCU 110 (FIG. 1). As shown, the processing device 1500 includes: a memory 1550; processing circuitry 1530 connected to the memory 1550; input output (I/O) circuitry 1540 connected to the processor 1120, which can be used to transmit control signals and/or receive input from a network/devices/sensors 1510 Depending on the implementation of processing device 1500, the processing device 1500 may include many more components than those shown in FIG. 15. However, it is not necessary that all of these conventional components be shown in order to disclose the illustrative example embodiment(s).

The memory 1550 may be a computer readable storage medium that generally includes a random-access memory (RAM), read only memory (ROM), and/or a permanent/long-term mass storage device. The memory 1550 may also store an operating system and any other routines/modules/applications for providing some or all of the functionalities of processing device 1500 to be executed by the processing circuitry 1530. These software components may also be loaded from a separate computer readable storage medium into the memory 1550 using a drive mechanism (not shown). Such separate computer readable storage medium may include a disc, tape, DVD/CD-ROM drive, memory card, or other like computer readable storage medium (not shown). In some example embodiments, software components may be loaded into the memory 1550 via one of the wireless/wired communication interface included as part of I/O circuitry 1540.

The processing circuitry 1530 may include a processor configured to carry out instructions of a computer program by performing the arithmetical, logical, and input/output operations of the system. Instructions may be provided to the processing circuitry 1530 by the memory 1550. In some example embodiments, processing circuitry 1530 may include a model predictive controller (MPC) or a linear-quadratic regulator (LQR) controller, a microprocessor, a general purpose processor, or the like.

As will be understood, programs stored in the memory 1550 may be used to set forth the special purpose functionalities of a particular device, which may vary depending on the implementation of the processing device 1500.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the description herein, illustrative embodiments are described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware.

Such existing hardware (e.g., data processors and controllers) may be implemented using processing or control circuitry such as, but not limited to, one or more processors, one or more Central Processing Units (CPUs), one or more microcontrollers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

In this application, including the definitions below, the term 'module' may be replaced with the term 'circuit.' The term 'module' may refer to, be part of, or include processor hardware (shared, dedicated, or group) that executes code and memory hardware (shared, dedicated, or group) that stores code executed by the processor hardware.

The functionality of any given module of the present disclosure may be distributed among multiple modules that are connected via interface circuits.

Even further, any of the aforementioned methods may be embodied in the form of a program. The program may be stored on a non-transitory computer readable medium and is adapted to perform any one of the aforementioned methods when run on a computer device (a device including a processor). Thus, the non-transitory, tangible computer readable medium is adapted to store information and is adapted to interact with a data processing facility or computer device to execute the program of any of the above mentioned embodiments and/or to perform the method of any of the above mentioned embodiments.

The computer readable medium or storage medium may be a built-in medium installed inside a computer device main body or a removable medium arranged so that it can be separated from the computer device main body. The term computer-readable medium, as used herein, does not encompass transitory electrical or electromagnetic signals propagating through a medium (such as on a carrier wave); the term computer-readable medium is therefore considered tangible and non-transitory.

The term memory is a subset of the term computer-readable medium. The term computer-readable medium is therefore considered tangible and non-transitory. Non-limiting examples of the non-transitory computer-readable medium include, but are not limited to, rewriteable non-volatile memory devices (including, for example flash memory devices, erasable programmable read-only memory devices, or a mask read-only memory devices); volatile memory devices (including, for example static random access memory devices or a dynamic random access memory devices); magnetic storage media (including, for example an analog or digital magnetic tape or a hard disk drive); and optical storage media The term data storage device may be used interchangeably with computer-readable medium.

## Claims

1. A method for controlling a vehicle (1200), the method comprising:
obtaining topographic data associated with a geographic area (1205);
selecting a path plan for use by the vehicle based on the topographic data, the path plan indicating a directional path of travel associated with the geographic area, and the path plan including target states of charge (SOC) associated with a plurality of segments of the directional path of travel (1210);
identifying first segments of the plurality of segments in the directional path of travel as targets for a regenerative mode, the first segments having decreasing elevation, the regenerative mode returning energy to an energy storage device in the vehicle (1215);
identifying second segments of the plurality of segments in the directional path of travel the
second segments of the plurality of segments including a plurality of portions having at least one of an increasing elevation or a substantially unchanging elevation (1220); and during travel of the vehicle along selected segments of the plurality of segments , operating the
vehicle in an operating mode determined in accordance with the path plan until the energy storage device is discharged to a target state of charge (SOC) (1225).

2. The method as in claim 1, wherein the obtaining the topographic data includes:
obtaining the topographic data from previous work done by the vehicle, or previous work done by another vehicle, at a worksite including the directional path of travel and/or obtaining the topographic data from a survey including one or more of GPS coordinates or waypoints along the directional path of travel (1205).

3. The method as in either of claims 1 or 2, further comprising:
obtaining an observed SOC, deriving a generator torque for one or more of a first electric machine or a second electric machine for a regenerative mode based on the observed SOC and the target SOC (1325); and
deriving an engine torque and at least one of a first electric machine torque or a second electric machine torque to be applied in a selected mode, the deriving the engine torque being based on the generator torque, a gain, and an operator input torque (1330).

4. The method as in claim 3, wherein each target SOC is determined based on a slope of the respective first segment of the plurality of segments, a length of the respective second segment of the plurality of segments, a ground speed of the vehicle, and a capacity to recharge the energy storage device during the regenerative mode (1315).

5. The method as in any of claims 1-4, wherein the regenerative mode includes one of a regenerative braking mode or a coasting mode (1215).

6. The method as in any of claims 1-5, further comprising:
preventing entry into the regenerative mode in response to the energy storage device satisfying an SOC full threshold during a time the vehicle is traversing at least one of the first segments of the plurality of segments (1335).

7. The method as in any of claims 1-6, further comprising:
permitting entry into a battery use mode in response to the SOC satisfying an SOC full threshold during a time the vehicle is traversing at least one of the second segments of the plurality of segments (1345); and
using the energy storage device to provide power for at least a portion of vehicle propulsion during the battery use mode and/or using power provided by the energy storage device to engage a propulsion mechanism of the vehicle through a power take-off (1350).

8. The method as in either claim 6 or 7, wherein the SOC full threshold is between approximately 90% to 100 % SOC of the energy storage device (1335).

9. The method as in any of claims 1-8, wherein the path plan selected for use by the vehicle includes one of a point-to-point path plan or a coverage-area path plan selected from a list of candidate path plans by a path planner module, or a previously recorded path plan historically used to complete a relevant task within the geographic area (1205, 1210).

10. A system comprising:
a GPS receiver configured to locate a vehicle in relation to a directional path of travel (115);
an inertial measurement unit or an accelerometer configured to generate inertial measurements associated with a tilt, a roll and a yaw of the vehicle (230);
a controller configured to control a transmission of the vehicle to enter a selected mode of operation in accordance with a path plan and the inertial measurements, the selected mode of operation being selected to reduce a cost function associated with a state of charge (SOC) of an energy storage device of the vehicle (110, 210);
the transmission (194) including clutches (C1-C5) configured to implement the selected mode of operation of the transmission from among a plurality of possible modes of operation of the transmission, a gearbox (130), and a variator (170) integral with the gearbox and configured to operate in a selected mode of operation, the variator including a planetary gear (1110) arrangement including planetary gears (1145), a sun gear (1125), and a ring gear (1115), the variator configured to couple a crankshaft (1155) of an internal combustion engine (120) to the sun gear, and the planetary gears are selectively coupled to certain gears of the gearbox for operation in first modes, and the ring gear is selectively coupled to other gears of the gearbox for operation in second modes;
a first electric machine coupled to the gearbox to provide or receive a first rotational energy via the gearbox (140);
a second electric machine coupled to the gearbox to provide or receive a second rotational energy via the variator (160);
at least one inverter coupled to the first electric machine and the second electric machine, the at least one inverter configured to control the first electric machine and the second electric machine in a motoring mode and in a regenerative mode (150);
in the regenerative mode, the at least one inverter is configured to rectify alternating current generated by rotation of the first electric machine and the second electric machine to charge the energy storage device (150); and
the at least one inverter configured to output rotational speed and torque values based on alternating current (AC) phase measurements of the first electric machine and second electric machine (150).

11. The system as in claim 10, wherein the controller is configured to implement a machine learning model or a model predictive controller (MPC) (1110).

12. The system as either claim 10 or 11, further including speed sensors configured to sense rotational speeds associated with shafts of the transmission, the gearbox, the internal combustion engine, or the variator, wherein the speed sensors include one or more of a resolver, an encoder, a Hall Effect sensor, or a magnetic field sensor (230).

13. The system as in any of claims 10-12, wherein the plurality of possible modes of operation of the transmission include two or more of a shared parallel drive mode, a sole drive mode of the internal combustion engine, a sole drive mode of the first electric machine, a sole drive mode of the second electric machine, a regenerative mode of the first electric machine, a sole drive mode of the second electric machine, or a coasting mode (190).

14. The system as in any of claims 10-13, further comprising:
a battery management system (166), transmission control unit (110), or inverter (150) configured to control the SOC of the energy storage device.

15. The system as in of any of claims 10-14 configured to implement the method as in any of claims 1-13.
